# EUROPEAN PATENT APPLICATION

(11) **EP 0 949 799 A2**
(43) Date of publication of application: **13.10.1999**
(21) Application number: 99302737.4
(22) Date of filing: 08.04.1999
(51) Int. Cl.: H04N 1/00, H04N 1/333

(54) **Apparatus and method for using two-dimensional data compression over an air interface**

(30) Priority: 09.04.1998 US 57767
(71) Applicant: NOKIA MOBILE PHONES LTD., 02150 Espoo (FI)
(72) Inventor: Limitainen, Pasi, 36110 Ruutana (FI)
(74) Representative: Hibbert, Juliet Jane Grace

(57) **Abstract**

A method and apparatus are provided for processing first encoded facsimile data generated by a source facsimile device, for subsequent transmission to a receiving station, and for ultimate communication to a destination facsimile device. According to one embodiment of the invention, the method is performed by a transmitter device, such as a radiotelephone, that is bidirectionally coupled to the source facsimile device. The method comprises steps of detecting the first encoded facsimile data output by the source facsimile device, encoding the first encoded facsimile data to produce second encoded facsimile data, and transmitting the second encoded facsimile data to the receiving station, which preferably includes a Base Station, Mobile Switching Center and Interworking Function. In a preferred embodiment of the invention, the first encoded facsimile data is one-dimensionally coded using a Modified Huffman (MH) encoding technique, and the second encoded facsimile data is two-dimensionally coded using a Modified Modified Read (MMR) encoding technique. Further steps are performed by the receiving station, and include receiving the second encoded facsimile data, detecting the second encoded facsimile data, converting the second encoded facsimile data back to first encoded facsimile data, and forwarding the first encoded facsimile data to the destination facsimile device.

## Description

The present invention relates to wireless communication systems and, in particular, those that combine radiotelephones operating in accordance with spread spectrum technology with facsimile capabilities.

The cellular communications system has brought portable radiotelephony to many subscribers throughout the world by combining many technologies such as high frequency semiconductors, computers and communications technology. As the technology matures it opens opportunities for expanded services such as facsimile transmission.

The basic call flow for a radiotelephone generally requires a mobile telephone with radio transmission and receiving capability, a local receiving and transmitting base station, one or more stationary mobile switching centers, and transmit switching means that connect to a public switched telephone network (PSTN). The PSTN encompasses the sundry telephone company facilities that join subscribers' lines to each other, locally and long distance.

The radiotelephone and associated base station each require a radio antenna and suitable receiving and transmission capabilities given the band of transmission and reception frequencies, transmission power limitations, and receiver sensitivities, and generally employ full duplex communications which permit transmission and reception between callers during the same time interval.

A simple radiotelephone network might accommodate increased subscribership by enlarging the band of available transmission frequencies. However, such an approach quickly exhausts the spectrum of allocated frequencies and does not deal with transmission distance limitations due to low power constraints required for portability. A practical solution has been to locate base station antennas in a cellular network of approximately evenly distributed clusters with some allowable overlap, which in its most widely adopted configuration appears as a honeycomb of ideally hexagonal cells when projected on a planar map. To work effectively, each adjacent cell operates with a set of different transmission and receiving frequencies.

Before transmitting either conversation or data over the radiotelephone, an exchange (referred to as "handshaking") of control data must occur which essentially assigns traffic channel frequencies, validates electronic serial numbers to permit access, and determines the type of service required. Handshaking begins when the mobile telephone caller enters a telephone number and presses a send key transmitting both the telephone number and a series of control messages to a receiving cell (also referred to as a base station). Upon receipt of origination messages the receiving cell assigns the radiotelephone a traffic channel and forwards the telephone number to the base station. A series of messages follow regarding channel assignments, validations, and mutual acknowledgments.

Greater usage among consumers of mobile telephone technology creates market pressures and further opportunities to add new services and features. Often this results in requirements to increase the communication channel capacity, which is usually addressed by expanding the transmitting frequency spectrum or improving the efficiency of the allocated bands. However, mobile telephone portability also implies strict adherence to efficient bandwidth utilization, low power consumption, and non-redundant electronic data transmission and signal processing.

The CCITT (Formerly the Comite Consultatif Internationale de Telegraphique et Telephonique (Consultative Committee for International Telephone and Telegraph, telephone and telegraph committee of the International Telecommunication Union (ITU), now the ITU Telecommunications Standardization Sector (ITU-T))) issued a standard in 1980 leading to the modern digital facsimile and insuring its reliable high-speed transmission over telephone lines. For a full understanding of the standards, see, e.g., Terminal Equipments and Protocols for Telematic Services, Standardization of Group 3 Facsimile Apparatus for Document Transmission (as amended 1984, 1988, 1993) (TSS Group 3). Any facsimile interfacing to a radiotelephone for use within the existing worldwide telecommunications structure must conform to the TSS Group 3 standards.

TSS Group 3 facsimile devices are designed to be faster than their earlier generation, known as Group 1 and Group 2, counterparts. For example, after a one-time initial 15 second handshake, facsimile devices based on TSS Group 3 specifications send an ISO A4 size document over an unconditioned dial up telephone-type circuit in less than one minute and, on average, in 30 seconds or less. The TSS Group 3 facsimiles also offer simplicity of operation, memory storage features to reduce broadcast time, universal compatibility, and adaption to the performance characteristics of the telephone line by varying transmission speeds downward from the standard 9,600 bits per second (BPS), if necessary

A series of five phases referred to as a facsimile device's communications protocol are carried out in every facsimile transmission: Phase A establishes the call; Phase B is a pre-message procedure; Phases C1 to C2 include in-message procedures and message transmission; Phase D is the post-message procedure; and finally, Phase E deals with call release. In summary, Phase A takes place when the transmitting and receiving units recognize and acknowledge the hook up. As with the radiotelephone and electronic communications, generally, a handshaking procedure begins between the transmitting and receiving units. In a next step the calling facsimile device sends a 1,100-Hz frequency signal or a calling tone to the receiving machine. The calling facsimile device then sends a Called Station Identification to which the called machine responds by transmitting a 2,100-Hz frequency tone. Phase B executes the pre-message procedure, where the answering machine identifies itself and describes its capabilities utilizing digital data packed in frames conforming to a High-level Data-Link Control (HDLC) standard. The calling facsimile device then responds to the called facsimile device's information about itself. Just before transmitting image data, the caller sends a Digital Command Signal informing the called machine how to receive the facsimile, that is, information describing modem speed, image width, image encoding, and page length. This ends the initial handshaking routine.

Phase C, which is made up of two parts, contains the facsimile data transmission portion of the communication. Sub-phases C1 and C2 take place simultaneously, with sub-Phase C1 synchronizing transmission, monitoring, and detecting line problems, while sub-Phase C2 deals with data transmission. An Error Correction Mode encapsulates data within HDLC frames which provides the receiver with the capability to check for and request the retransmission of data when errors in transmission occur. After a document page has been transmitted, the post message Phase D begins when the caller sends a Multi-Page Signal to query whether additional pages remain to be transmitted. If more pages remain to be transmitted, then the caller responds with a Message Confirmation Frame, and Phase C begins again. After the final page has been sent the caller transmits either an End Of Message Frame indicating that all pages have been sent, or an End Of Procedure Frame indicating a readiness to terminate the call. Once the transmission of documents is complete, Phase E begins by the caller sending a Disconnect Frame, thereby disengaging from the call.

Transmission time depends, among other things, on modem speeds, line conditioning error rates, communication protocols, and to what degree the document can be electronically compressed through coding. Conventional facsimile devices transmitted every white or black picture element present on each page. However, image compression encoding makes it possible to remove redundancy from the document at the sending end and to permit restoration of the full document at the receiving end, thus transmitting fewer bits and thereby shortening transmission times and reducing errors.

Facsimile images are scanned in a horizontal line across the short width of a document. The line can be sampled 1728 times electronically, creating picture elements (pels). A TSS Group 3 facsimile image can have a total of 1,973,376 pixels when measured 1,728 from side to side and 1,143 from top to bottom. An image of this magnitude sent uncompressed at 9,600 bps would consume nearly three and a half minutes to transmit - far in excess of the TSS Group 3 standard of one minute.

In theory it is more probable that a white pel will be followed by other white pels before reaching a black pel. In typed or printed materials, these white run lengths often continue across an entire page. To take advantage of this phenomenon the TSS Group 3 recommends that a one or two dimensional coding scheme be employed to reduce the amount of data actually transmitted. When the receiving facsimile device decodes the compressed facsimile image, it regenerates the original black and white pels and prints the image, accordingly.

One coding method referred to as the Modified Huffman (MH) code specifies 92 binary codes to represent the combination of white pel runs in the range of zero to 1728 pels, and another 92 binary codes to represent the combination of black pel runs in the range of zero to 1728 pels. The shorter binary codes are assigned to a combination of the longest and most commonly occurring runs. The code for a run of black pels differs from its complementary white run because the latter's probability distribution differs. For example, the MH code produces a 9-bit code word representing a white run of 1728 pels, thus compressing this information 192 times. The receiving facsimile decodes this 9-bit code word once to recreate the entire original white run of 1728 pels.

Modified Huffman coding is a one-dimensional coding scheme which scans horizontal lines of a page and generates tokens based on data from each individual line The coding scheme defines tokens for runs of picture elements (pels). Modified Huffman compresses only one scan line at a time, which means every succeeding line is viewed independently. By example, if there are ten black pels 1, ten white pels 2, and seven black pels 3 on a line such as the one shown in Fig. 5a, MH coding would produce three 'codes' defining (black, 10), (white, 10), (black, 7), instead of listing all the different pels.

A two-dimensional encoding scheme considers not only the line being scanned, but the previous line or lines as well. One such methodology is referred to as Modified Relative Element Address Differentiation, or Modified Read (MR), which uses the line immediately preceding the "coding" line (i.e., the line being scanned and encoded) as a reference line on the theory that in a large number of instances the image data correlates both horizontally and vertically. For example, a printed letter "I" has both horizontal and vertical black image data contiguous up and down and from side to side. The MR methodology also considers the space between the lines as well as within given characters. This allows MR to work with differentials or rates of change between one line and the next line resulting in as much as a 35 percent improvement over MH coding. Other two-dimensional encoding techniques, such as described in the TSS Group 3 standard, can reduce transmission time by as much as 50 percent with further compression utilizing a Modified Modified READ (MMR) scheme. Hereinafter, coding techniques that read and account for pel states vertically as well as horizontally, such as MR or MMR coding techniques, are referred to as "two-dimensional" coding or encoding techniques.

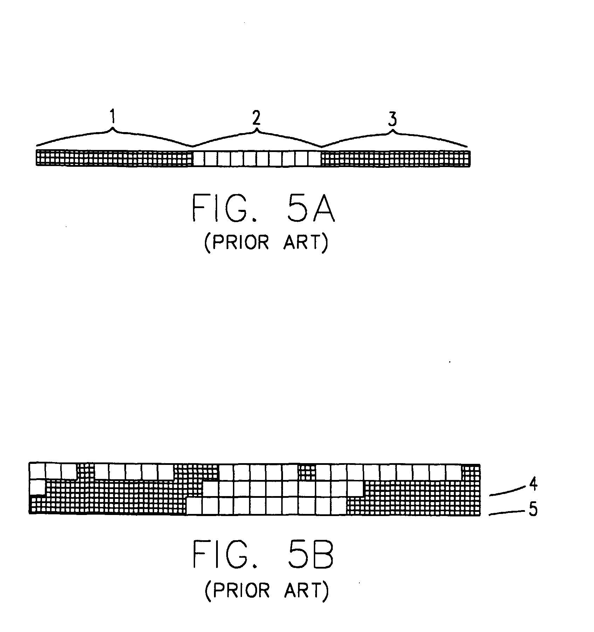

Fig. 5b illustrates an example of a reference line 4, a coding line 5, and two-dimensional coding. In this example, the coding line 5 could be coded so as to indicate 'reference line shifted one pel to left'. In two-dimensional coding, if no vertical correlations are found between lines, two lines following these lines are encoded with MH tokens.

Against this background, the present invention aims to ameliorate channel capacity demands due to the addition of facsimile services to radiotelephone applications.

In accordance with one aspect of the invention there is provided a method for use in a mobile station or radiotelephone that is bidirectionally coupled to a source facsimile device. The method is employed to encode first encoded data output by the facsimile device to produce second encoded data, and to then transmit the second encoded data from the radiotelephone to a receiving station over an air interface.

By means of the present invention, there is to provided a method for transforming one-dimensional coded facsimile image data into two-dimensional coded facsimile image data for transmission over an air interface between a mobile station and a base station. Furthermore, the present invention provides a method for transforming, at a receiving station, received two-dimensional coded facsimile image data to one-dimensional coded facsimile image data, for subsequent transmission to a destination facsimile device.

In accordance with one embodiment of the invention, the first encoded data includes one-dimensional coded facsimile image data, and the radiotelephone converts this one-dimensional coded facsimile image data to two-dimensional coded facsimile image data, prior to transmission. A method in accordance with this aspect of the invention comprises the steps of: 1) detecting the one-dimensional coded facsimile image data output by the facsimile device; 2) reading a first line of the one-dimensional coded facsimile image data; 3) storing the line of one-dimensional coded facsimile image data read at step 2 as a reference line; 4) transmitting the line of one-dimensional coded facsimile image data stored as the reference line to the receiving station; 5) reading a next line of the one-dimensional coded facsimile image data; 6) storing the line of one-dimensional coded facsimile image data read at step 5 as a coding line; and 7) comparing the line stored as the reference line to the line stored as the coding line to determine if a correlation exists. If the lines do correlate, a next step is performed of two-dimensionally encoding the line stored as the coding line. A further step includes transmitting the two-dimensionally encoded line to the receiving station. The method then continues in a similar manner as described above for other lines of one-dimensional coded facsimile image data output by the facsimile device, wherein each line that is stored as a coding line for being two-dimensionally encoded is used as a reference line for encoding a subsequently read line of one-dimensionally encoded facsimile image data.

Also in accordance with this invention, the receiving station, which preferably includes a Base Station, Mobile Switching Center and Interworking Function (also collectively referred to as a BMI), converts two-dimensional coded facsimile image data received from the radiotelephone to one-dimensional coded facsimile image data, and forwards the one-dimensional coded facsimile image data to a destination facsimile device. A method in accordance with this aspect of the invention includes the steps of: 1a) receiving coded facsimile image data at the receiving station; 2a) detecting the coded facsimile image data received at the receiving station; 3a) reading a first line of the coded facsimile image data detected at step 2a; 4a) forwarding the line of the coded facsimile image data read at step 3a to the destination facsimile device; 5a) reading a next, two-dimensionally coded line of the coded facsimile image data; 6a) converting the line of coded facsimile image data read at step 5a to a one-dimensional coded line of facsimile image data, based on the line of the coded facsimile image data read at step 3a; and 7a) communicating the one-dimensional coded line of facsimile image data to the destination facsimile device.

According to a preferred embodiment of the invention, the one-dimensional coded facsimile image data is encoded in accordance with the MH encoding technique, and the two-dimensional coded facsimile image data is encoded in accordance with the MR or MMR encoding technique.

In accordance with another embodiment of the invention, the radiotelephone converts the one-dimensional coded facsimile image data output by the facsimile device to non-encoded facsimile image data (i.e. picture elements), and then converts the non-encoded facsimile image data (i.e., picture elements) to two-dimensionally encoded image data for transmission to the receiving station. In this embodiment of the invention the radiotelephone performs similar steps as were described above, except that step 7 is performed by decoding the line stored as the reference line to provide a first corresponding line of non-encoded image data (i.e., picture elements), and by decoding the line of image data stored as the coding line to provide a second corresponding line of non-encoded image data (i.e., picture elements). A next step includes performing a predetermined algorithm for identifying correlations between the two lines of non-encoded image data, and two-dimensionally encoding the second corresponding line of non-encoded image data, based on the first corresponding line of non-encoded image data. In accordance with one embodiment of the invention, the predetermined algorithm and the step of two-dimensionally encoding the second corresponding line of non-encoded image data are performed in accordance with section 4.2 of the TSS Group 3 standard.

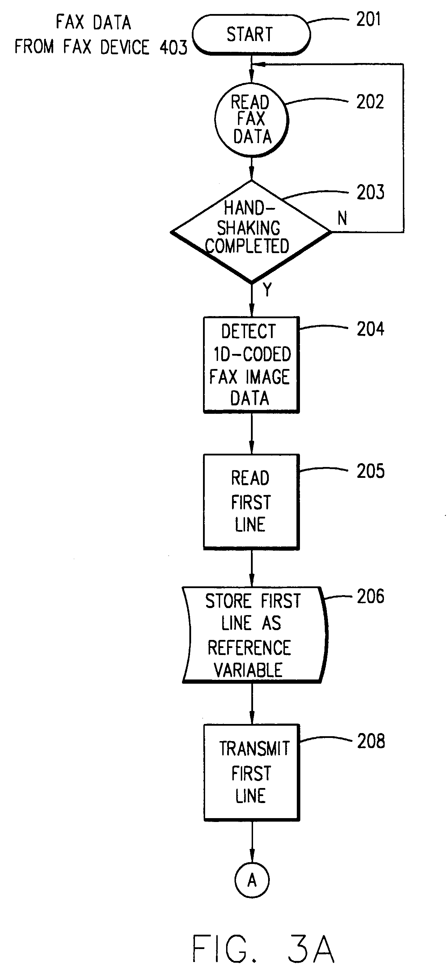

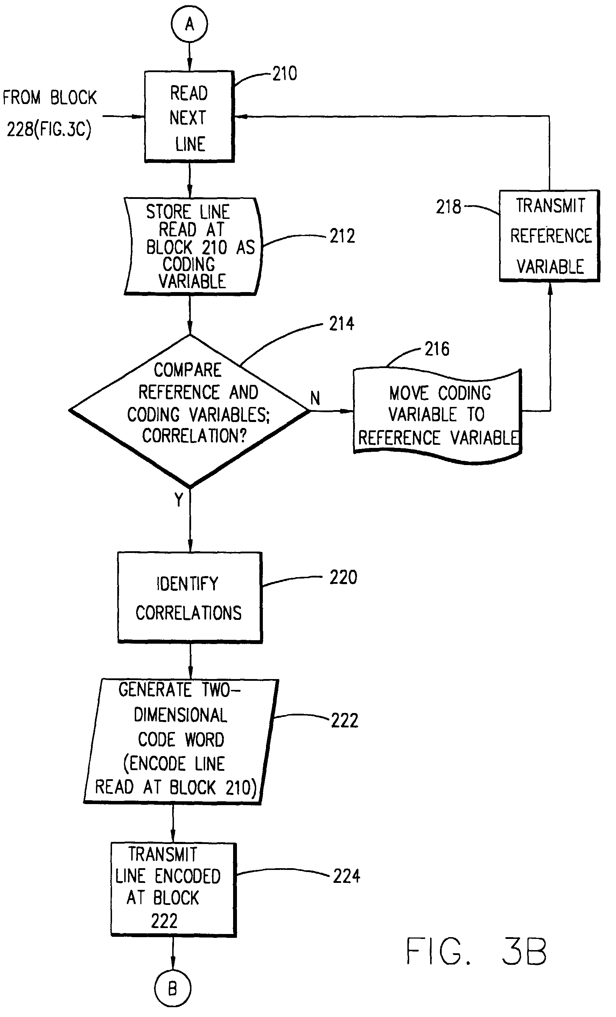

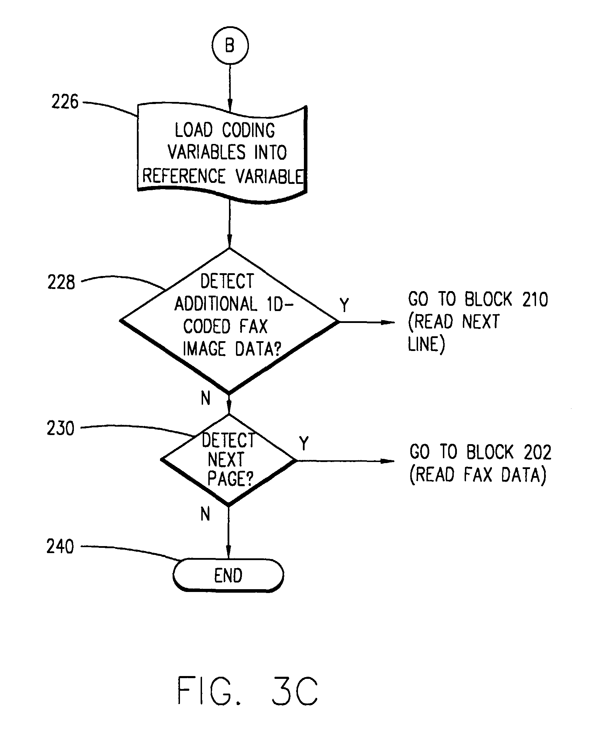

As employed herein, a correlation implies that a predetermined relationship exists between two adjacent lines of facsimile image data. That is, a correlation as employed in this invention implies that a predetermined relationship exists between picture elements of adjacent lines, the predetermined relationship including, for example, the inclusion of at least one "changing" picture element (i.e., a picture element whose color is different from that of a previous picture element in a same line) on both a coding line and an adjacent reference line, as is defined in, for example, section 4.2 of the TSS Group 3 standard (see also, e.g., Fig. 3/T.4 of the TSS Group 3 standard).

Also in accordance with this embodiment of the invention, the receiving station converts the two-dimensional coded facsimile image data to non-encoded facsimile image data before converting the non-encoded facsimile image data to one-dimensionally encoded facsimile image data. By example, in this embodiment of the invention, the steps performed by the receiving station are similar to those described above, except that step 6a is performed by converting the line of coded facsimile image data stored as the reference line into a first non-encoded line of facsimile image data. Thereafter, steps are performed of converting the line of coded facsimile image data stored as the coding line into a second non-encoded line of facsimile image data, based on the first non-encoded line of facsimile image data, and then encoding the second non-encoded line of facsimile image data to provide a resultant line of one-dimensionally encoded facsimile image data. The resultant line of one-dimensionally encoded facsimile image data is then forwarded to the destination facsimile device, and is also stored as the reference line to be used for converting a next line of two-dimensionally encoded facsimile image data to non-encoded facsimile image data, before again converting this line to one-dimensional coded facsimile image data, in the manner described above.

Preferably, the radiotelephone and BMI operate in accordance with a cellular system, such as a Code Division Multiple Access (CDMA) system, that support certain applications, referred to as service options. All CDMA service options use the capability provided by CDMA system components and respective software embodiments. For example, service options, such as a mobile facsimile device, may utilize the CDMA system protocol to interface facsimile protocols and accompanying communications technology, including data compression techniques. In fact, to produce an efficient means of transmitting facsimile images over the air in accordance with TSS Group 3 standards, facsimile image data is compressed. Mobile facsimile communications utilizing MR and MMR encoding, when coupled with the advantages of CDMA communications technology, generally realize significant improvements in channel capacity. When CDMA data standards apply to a facsimile application, and MH coding is employed on a PSTN link connecting a BMI to a destination facsimile device, it is permissible to use MMR compression on the Uₘ air interface between the radiotelephone and the base station, as is described in standard IS-99 (see, e.g., Table 3.2-3 of IS-99). The teachings of this invention are not limited for use only with CDMA cellular systems, but may be employed as well in TDMA and other types of cellular systems.

The above set forth and other features of the invention are made more apparent in the ensuing Detailed Description of the Invention when read in conjunction with the attached Drawings, wherein:
Fig. 1 is a block diagram of a communications network 100 in accordance with the invention, the communications network 100 including facsimile devices 403 and 128, a mobile station 101, and further including a Base Station (BS), Mobile Switching Center (MSC) and Interworking Function, referred to collectively as a BMI 120.
Fig. 2 shows a block diagram of the BMI 120 and facsimile devices 128 of Fig. 1, wherein the BMI 120 is communicatively linked with the facsimile device 128 over a Public Switched Telephone Network (PSTN) 130.
Figs. 3a-3c show a flow diagram of a method for transforming one-dimensional coded data to two-dimensional coded data, in accordance with the invention.
Figs. 4a-4c show a flow diagram of a method for converting two-dimensional coded data to one-dimensional coded data, in accordance with the invention.
Fig. 5a shows an example of white and black picture elements (pels) of an image line that is to be encoded using a conventional one-dimensional encoding technique.
Fig. 5b shows an example of white and black picture elements (pels) of a number of image lines that are to be encoded using a conventional two-dimensional encoding technique.

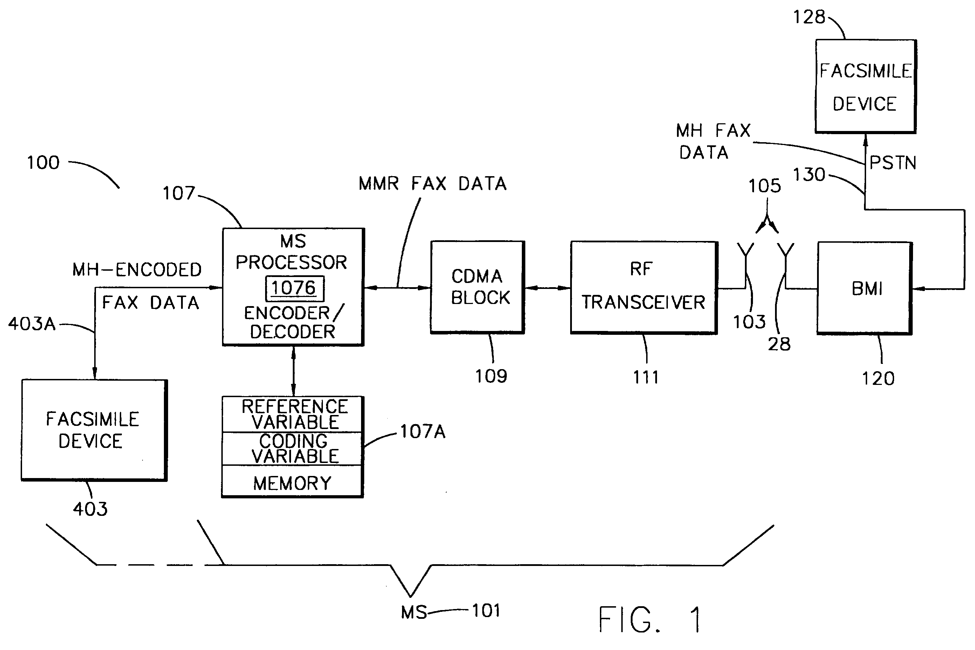

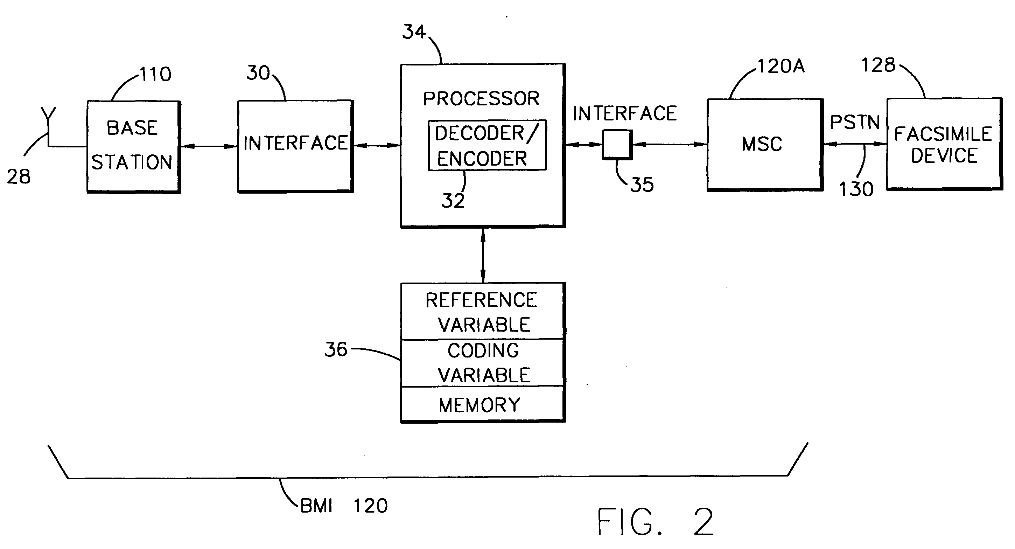

Fig. 1 is a simplified block diagram of a communications network 100 that is constructed in accordance with this invention. The communications network 100 includes a mobile station 101, such as but not limited to a cellular radiotelephone, a wireless air interface 105, and facsimile devices 403 and 128, and further includes a Base Station (BS), Mobile Switching Center (MSC) and Interworking Function, referred to collectively as a BMI 120. The mobile station 101 includes an antenna 103 for transmitting signals to and for receiving signals from the BMI 120. The BMI 120 is a part of a cellular network, and, referring to Fig. 2, comprises a base station 110 and a Mobile Switching Center (MSC) 120a. The MSC 120a provides a connection to the Public Switched Telephone Network (PSTN) 130 when the mobile station 101 is registered with the network.

In accordance with an aspect of the present invention, the mobile station 101 converts one-dimensional coded facsimile image data that is output by facsimile device 403, and which is to be transmitted to the base station 110, into two-dimensional coded facsimile image data, before transmitting the image data in two-dimensional encoded form to the base station 110 over air interface 105, as will be further described below.

The base station 110 is usually one of several base stations coupled to MSC 120a, although for the purposes of convenience, only base station 110 is shown. The base station 110 includes an antenna 28 for transmitting signals to and for receiving signals from the mobile station 101. These signals include signalling information in accordance with the air interface of the cellular system (e.g., IS-95).

As was previously described, the mobile station 101 includes an antenna 103 for transmitting signals to and for receiving signals from the base station 110. To this end, the mobile station 101 also includes a RF transceiver portion 111, and a control processor 107 that provides signals to and receives signals from the RF transceiver portion (also referred to as a "RF block") 111, via a code division multiple access (CDMA) block 109. These signals include signalling information in accordance with the air interface of the cellular system (e.g., IS-95), and may also include user speech, and/or user generated data. The CDMA block 109 performs code spreading techniques to signals received by the CDMA block 109 from the control processor 107, and performs code despreading techniques to signals received by the CDMA block 109 from the RF block 111, in accordance with, by example, a CDMA Standard such as EIA/TIA IS-95.

Within the control processor 107 is included an encoder/decoder block 107b. The encoder/decoder block 107b is employed to two-dimensionally encode one-dimensional encoded image data received by the mobile station 101 from facsimile device 403, in accordance with one embodiment of the invention, and, in accordance with another embodiment of the invention, the encoder/decoder block 107b is employed to decode one-dimensional encoded image data received by the mobile station 101 from facsimile device 403 to provide non-encoded image data (i.e., picture elements), before converting the non-encoded image data to two-dimensionally encoded image data, as will be described below.

The mobile station 101 also includes a memory 107a wherein is stored an operating program for controlling the operation of the control processor 107, as well as a plurality of constants and variables that are used by the control processor 107 during the operation of the mobile station 101. For example, the memory 107a stores a REFERENCE variable and a CODING variable which are used by the control processor 107 while transforming image data from one coded version to another coded version. These variables will be further described below.

The facsimile device 403 may be an integral part of the mobile station 101, or may be a separate device which is capable of operating in conjunction with the mobile station 101 for transmitting and receiving facsimile data. The facsimile device 403 is coupled to the mobile station 101 via a suitable interface 403a, such as, by example only, a serial link interface (e.g., RS-232), an RF (e.g., LPRF) interface, or an IR interface. Each of the facsimile devices 403 and 128 preferably operates in accordance with, by example, TSS Group 3 standards. Facsimile device 403 is assumed to have a capability of encoding a scanned document into a conventional one-dimensional encoded data stream using, in a presently preferred embodiment of the invention, the Modified Huffman (MH) encoding technique. If it does not, then the control processor 107 can also perform the one dimensional coding based on non-encoded data output from the facsimile device 403.

Referring to Fig. 2, the BMI 120 is shown in greater detail in accordance with a presently preferred embodiment of the invention. In addition to the base station 110 and MSC 120a, the BMI 120 also includes a processor 34 and an interface 30 through which the base station 110 is bidirectionally coupled to the processor 34. The BMI 120 also includes an interface 35 through which the processor 34 is bidirectionally coupled to the MSC 120a. Within the processor 34 is included a decoder/encoder block 32. In accordance with one embodiment of the invention, the decoder/encoder block 32 is employed to convert two-dimensional encoded image data provided to the processor 34 from the base station 110 (and originally transmitted to the base station 110 from mobile station 101) directly into one-dimensionally encoded image data, and, in accordance with an alternate embodiment of the invention, the decoder/encoder block 32 is employed to decode two-dimensional encoded image data provided to the processor 34 from base station 110 into non-encoded image data, before encoding the non-encoded image data to provide one-dimensionally encoded data, as will be described below. The BMI 120 also includes a memory 36 wherein are stored an operating program for controlling the operation of the processor 34, and a plurality of constants and variables that are used by the processor 34 during the operation of the BMI 120. For example, like the mobile station 101, the memory 36 stores respective REFERENCE and CODING variables. These variables are used by the BMI 120 in a manner which will be further described below.

Before describing the method of the invention in detail, a number of aspects will first be discussed relating to the communication of data between devices 403, 101, 120, and 128 shown in Fig. 1. Prior to the transmission of either voice communication or facsimile image data from the mobile station 101, an exchange of control data must occur which essentially assigns traffic channel frequencies, validates electronic serial numbers which allow access, and determines the type of service required. This exchange of control data is referred to as "handshaking". For example, a "handshake" begins when a user of the mobile station 101 enters a telephone number and presses a send key (not shown) of the mobile station 101 so as to cause the mobile station 101 to transmit both the telephone number and a series of control messages, including, e.g., origination messages, to the base station 110. Upon receipt of the origination messages, the base station 110 assigns the mobile station 101 a traffic channel and forwards the telephone number to the MSC 120a. This is followed by a series of messages being exchanged between the devices 101 and 110, regarding channel assignments, validations, and corresponding acknowledgements.

The exchange of facsimile image data between facsimile devices 403 and 128 also requires the performance of handshaking routines, prior to the exchange of facsimile image data between these devices 403 and 128. By example, the facsimile device 403 requires the performance of a number of handshaking routines to transmit facsimile image data to the facsimile device 128. As was described above, these routines are divided into a number of phases, where:
Phase A establishes the call; Phase B determines transmission and reception procedures; and Phase C deals with facsimile image data transmission. Phase C includes two sub-phases, namely, sub-Phases C1 and C2, which take place simultaneously and which synchronize transmission and send the facsimile image data. More particularly, sub-Phase C1 deals with synchronization, line monitoring, and problem detection, and sub-Phase C2 deals with data transmission, such as the transmission of facsimile image data, where the data is transmitted at a rate determined by the transceiving capabilities of the transmitting and receiving devices. After Phase C is completed, Phases D and E are performed. Phase D handles post-message procedures, and Phase E deals with call release. By example, after transmitting a final page of a document that includes one or more images, the facsimile device 403 transmits either an End Of Message Frame indicating that all pages have been sent, or an End Of Procedure Frame indicating a readiness to terminate the call. After the completion of transmission of pages of a document, Phase E begins with the facsimile device 403 sending a Disconnect frame to the facsimile device 128, thereby disengaging or terminating the call.

This invention is peripherally associated with Phase A through sub-Phase C1 and with Phase D, to the extent that the conversion of one-dimensional coded facsimile image data to two-dimensional coded facsimile image data requires the recognition of when the image data beings to flow. A method in accordance with this invention for transforming one-dimensional coded facsimile image data to two-dimensional coded facsimile image data, and a method of the invention for converting the two-dimensional coded facsimile image data back to one-dimensional coded facsimile image data, occurs during sub-Phase C2.

In accordance with the invention, one-dimensional encoded facsimile image data output by facsimile device 403 is transformed to two-dimensional encoded facsimile image data within the mobile station 101. The two-dimensional encoded facsimile image data is then transmitted from the mobile station 101 to the base station 110 of BMI 120 over the air interface 105. Also in accordance with the invention, after the two-dimensional encoded facsimile image data is received by the base station 110, the image data is forwarded through interface 30 to the processor 34, which then transforms the image data back to one-dimensional encoded facsimile image data, before forwarding the data to the MSC 120a, and ultimately to the destination facsimile device 128 via PSTN 130.

In a preferred embodiment of the invention, the one-dimensional encoded facsimile image data output by facsimile device 403, and the one-dimensional encoded facsimile image data obtained within the BMI 120 (as a result of transforming the two-dimensional encoded facsimile image data to one-dimensional encoded facsimile image data), are encoded in accordance with the MH coding technique. That is, the preferred embodiment assumes that the one-dimensional encoded facsimile image data is encoded in accordance with MH coding, which specifies 92 binary codes to represent a combination of white runs in the range from zero to 1728 pels and other binary codes to represent a combination of black runs in the range from zero to 1728 pels. It should be noted, however, that in other embodiments of the invention, other one-dimensional coding techniques may be employed in lieu of MH coding, including, for example, a proprietary one-dimensional coding technique.

Also in accordance with the preferred embodiment of the invention, the two-dimensional encoded facsimile image data obtained within the mobile station 101 as a result of performing the method of the invention is encoded in accordance with the MMR coding technique. That is, the two-dimensional coding scheme employed by the mobile station 101 to convert one-dimensional coded data into two-dimensional coded data is preferably the MMR coding scheme, although in other embodiments, other two-dimensional coding schemes may also be employed, such as MR coding. As was previously described, unlike one-dimensional encoding schemes, two-dimensional encoding schemes consider not only the current line being scanned, but at least one previous line as well. By example, the TSS Group 3 standard describes a two-dimensional line-by-line MMR coding scheme in which a position of each changed pel on a line being observed is coded with respect to a position of a corresponding reference element situated on either the same line or on a reference line which immediately precedes the line being observed. In MMR coding (and in MR coding), a line immediately preceding another line that is being scanned is used as a reference line, and thereafter the scanned line is substituted with the reference line for subsequent encoding, until the end of a page is reached. As will be further described below, in accordance with one embodiment of the invention the mobile station 101 transforms the MH encoded data received from the facsimile device 403 into MMR encoded data by interpreting the facsimile session (i.e., phases), buffering or storing a sufficient amount of one-dimensional coded facsimile image data (i.e., more than one line of the data) to enable subsequent translation into two-dimensional coded data, and by performing a technique for converting the MH encoded data into MMR encoded data. The interpretation of the facsimile session includes eliminating pre-handshakes and post-handshakes, detecting facsimile image data, and detecting lines within the facsimile image data, as will also be further described below.

A method of the invention for converting one-dimensional encoded facsimile image data to two-dimensional encoded facsimile image data will now be described with reference to Figs. 3a-3c, wherein a flow diagram of the method is illustrated. At block 201 it is assumed that a user of the facsimile device 403 operates the device 403 so as to initiate a transmission of facsimile information to facsimile device 128, and that, as a result, a communication link is established between the facsimile device 403 and the facsimile device 128, via the components 403a, 101, 105, 120, and 130 of the communications network 100. It is also assumed that initial handshaking Phases A through C1 are performed in a similar manner as was described above. During these handshaking Phases, facsimile control message data, including various types of handshaking messages, are communicated between facsimile device 403 and facsimile device 128 via the established communication link. This facsimile data is read by the control processor 107 of the mobile station 101 at block 202 to determine when the initial handshaking routines are completed (block 203). If the control processor 107 determines that the handshaking routines are not completed ("No" block 203), the control processor 107 continues to read the facsimile data (block 202). Upon the control processor 107 determining that the handshaking routines are completed ("Yes" at block 203), control passes to block 204. The step identified by block 203 may be performed using any suitable technique for determining when initial handshaking routines are completed.

At block 204 it is assumed that the mobile station 101 detects, in data received from the facsimile device 403, coded facsimile image data, as well as the format of this coded facsimile data. For the purposes of this description, it is assumed that the facsimile device 403 outputs at least two lines of one-dimensional coded (e.g., MH coded) facsimile image data to the mobile station 101, and that this facsimile image data is detected at block 204. The step identified by block 204 may be performed in accordance with, by example, section 4.6 of standard TIA/EIA/IS-134, and may be performed based upon a detection of a Data Compression Format parameter of a T.30 Session Subparameter described in section 4.6 of standard TIA/EIA/IS-134.

After the performance of block 204, control passes to block 205 where a first line of the one-dimensional coded facsimile image data is read by the mobile station 101. After the first line of the one-dimensional coded facsimile image data is read at block 205, the first line is stored as the REFERENCE variable in the memory 107a (block 206), and is also transmitted by the mobile station 101 to the base station 110 over the interface 105 (block 208). Control then passes through connector A to block 210 where a next line of the one-dimensional coded facsimile image data output by device 403 is read by the mobile station 101. At block 212, the line of image data read at block 210 is stored in the memory 107a as the CODING variable. Thereafter, at block 214 the component 107b of control processor 107 performs a predetermined algorithm which compares the contents of the REFERENCE and CODING variables to determine whether or not there are any correlations (i.e., vertical correlations) between these lines. If "No" at block 214, the image data line stored as the CODING variable is loaded into the REFERENCE variable at block 216, and is also transmitted from the mobile station 101 to the base station 110 at block 218. Control then passes back to block 210 where a next line of the one-dimensional coded facsimile image data output by facsimile device 403 is read by the mobile station 101 and, thereafter, the process indicated by blocks 212 and 214 is performed in a similar manner as was described above.

If "Yes" at block 214, then control passes to block 220 where the mobile station 101 analyzes the image data lines stored as the REFERENCE and CODING variables for identifying the correlations determined to exist between these lines at block 214.

After the step indicated by block 220 is performed, the correlations identified at block 220 are used by encoder /decoder block 107b to encode the line of image data stored as the CODING variable into a two-dimensional coded line of image data (e.g., a MMR encoded line) at block 222. This encoding step is performed based on the correlations identified at block 220. The predetermined algorithm performed at block 214, the step of analyzing performed at block 220, and the step of encoding at block 222, may be performed in accordance with any suitable technique for converting one-dimensional coded image data to two-dimensional coded image data (e.g., the MMR coding scheme).

Further steps of the method of the invention will now be described. After the line of image data is encoded at block 222 to form a line of two-dimensionally encoded image data, the line of two-dimensionally encoded image data is transmitted from the mobile station 101 to the base station 110 at block 224. Control then passes through connector B to block 226 (Fig. 3c) where the image data line stored as the CODING variable is loaded into the REFERENCE variable stored in memory 107a. In this manner, this image data line is used as a next reference line against which a further line of image data read by the mobile station 101 is compared to determine if there are any correlations between these lines, as described above. At block 228 the mobile station 101 monitors the output of facsimile device 403 to determine whether or not additional one-dimensional coded facsimile image data is output by the device 403. If "Yes" at block 228, then control passes back to block 210 (Fig. 3B) where a next line of the facsimile image data output by facsimile device 403 is read and the method proceeds in a similar manner as was described above. If "No" at block 228, then control passes to block 230 where the mobile station 101 monitors the output of the facsimile device 403 to determine whether the device 403 outputs handshaking routine data, such as, for example, a message indicating an end-of-page and a beginning of a next page.

If "Yes" at block 230, then control passes to block 202, and the method proceeds in a similar manner as was described above. If "No" at block 230, and assuming that the mobile station 101 receives an end-of document message (e.g., an End of Message Frame) from facsimile device 403, then control passes to block 240 where the routine is terminated. During the performance of the steps indicated by blocks 230 and 240, communications occur between the facsimile devices 403 and 128 in accordance with, by example, the procedures of Phases D and E described above.

In accordance with another embodiment of the invention, the mobile station 101 performs similar steps as those described above for transforming the one-dimensionally coded facsimile image data output by the facsimile device 403 to two-dimensionally coded facsimile image data, except that at block 214 the control processor 107 retrieves the one-dimensionally encoded facsimile image data lines stored as the CODING and REFERENCE variables, and then decodes these lines (using component 107b) to provide corresponding lines of non-encoded facsimile image data (i.e., lines of picture elements). Thereafter, the lines of non-encoded facsimile image data are compared to determine whether or not any correlations exist between the picture elements of these lines. If "NO" at block 214, then the one-dimensional coded version of the image data line stored previously as the CODING variable is loaded into the REFERENCE variable (block 216), and is transmitted from the mobile station 101 to the base station 110 (block 218). The method then continues in a similar manner as described above.

If the step of block 214 results in a determination that correlations do exist between the picture elements of the lines of non-encoded facsimile image data ("Yes" at block 214), then at block 220 the mobile station 101 analyzes the lines to identify the correlations determined to exist at block 214. After block 220, control passes to block 222 where the identified correlations are used by the component 107b of mobile station 101 to encode the non-encoded version of the line previously retrieved from the CODING variable at block 214, for providing a corresponding two-dimensionally encoded (e.g., a MMR encoded) line of image data (i.e., the encoding step is performed based on the correlations identified). The step of comparing identified by block 214, and the steps identified by blocks 220 and 222 may be performed using any suitable two-dimensional coding scheme, such as the MMR coding scheme. By example, in a preferred embodiment of the invention these steps are performed in accordance with section 4.2 of the TSS Group 3 standard publication, and in accordance with the flow diagram shown in Fig. 7/T.4 of this publication. This publication is incorporated by reference herein in its entirety.

Also, the step of decoding identified by block 214 may be performed using any suitable technique for decoding one-dimensionally-encoded facsimile image data to provide non-encoded facsimile image data (i.e., picture elements). In accordance with one embodiment of the invention, this decoding step may be performed by decoding selected, incremental portions of the lines stored as the REFERENCE and CODING variables, to provide corresponding picture elements line segments for being compared in the above-described manner.

A method of the invention for transforming two-dimensional coded image data into one-dimensional coded image data will now be described. After the two-dimensional coded image data is transmitted from the mobile station 101 to the base station 110, the base station 110 forwards the two-dimensional coded image data to the processor 34 of BMI 120, which then responds by performing a process (to be described below) for converting the two-dimensional coded image data to one-dimensional coded image data, before forwarding the image data to the MSC 120a, PSTN 130, and ultimately to the facsimile device 128.

In accordance with a preferred embodiment of the invention, the process performed within the BMI 120 includes steps of reading received facsimile data until handshaking routines are completed and two-dimensional coded facsimile image data is detected, reading and buffering a sufficient amount of two-dimensionally encoded facsimile image data for being able to decode enough data to provide a line of one-dimensionally encoded facsimile image data, and decoding at least a portion of the two-dimensionally encoded facsimile image data to provide the line of one-dimensionally encoded facsimile image data. Thereafter, steps are performed of detecting additional received two-dimensionally encoded facsimile image data (if any is received), and performing the steps of reading, buffering, and decoding in a similar manner as described above. If no additional two-dimensionally encoded facsimile image data is received and detected, then a next step includes determining whether additional facsimile data has been received. If yes, then the facsimile data is read until additional two-dimensionally encoded facsimile image data is received and detected, in which case the steps of reading buffering, and decoding are performed in the above-described manner. Otherwise, if no additional facsimile data is received and detected, the method is terminated. The foregoing steps will be described in greater detail in the following description.

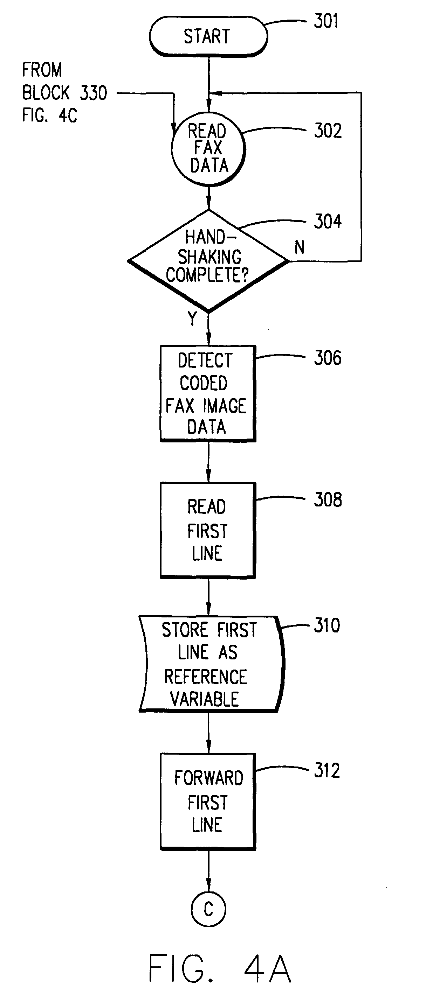

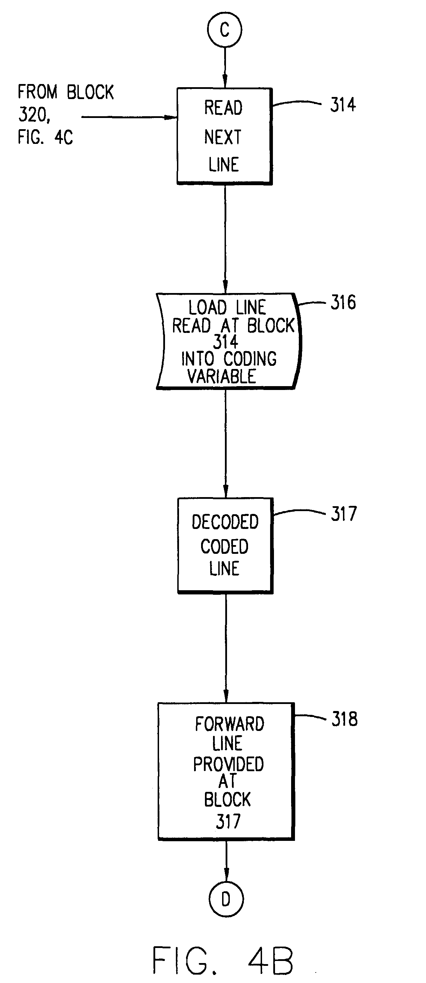

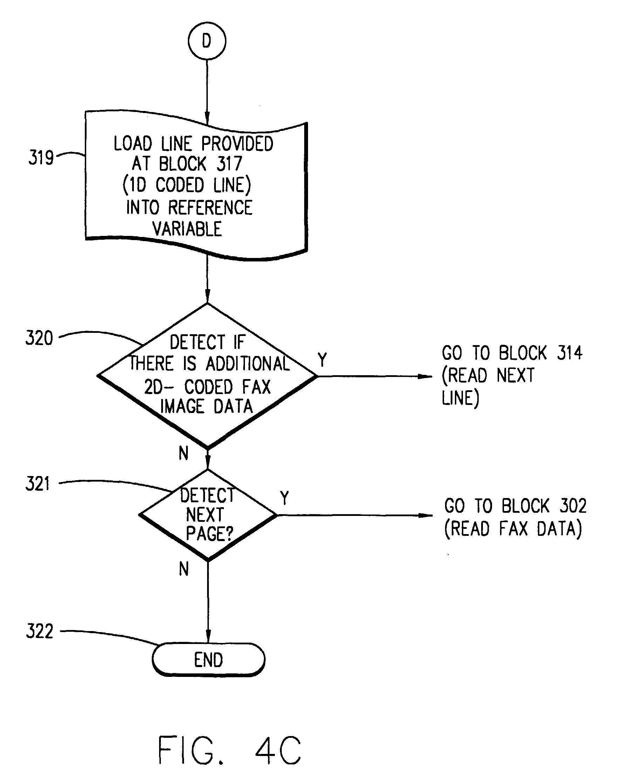

Referring to Figs. 4a-4c, a detailed flow diagram is shown of the method performed by the BMI 120 for transforming two-dimensional coded data into one-dimensional coded data, in accordance with one embodiment of the invention. The method includes the steps indicated by blocks 300-322. At block 300 the method begins. It is assumed that during the performance of the initial handshaking routine operations described above, where the facsimile device 403 and the facsimile device 128 exchange facsimile control data (e.g., handshaking messages), the processor 24 performs the steps indicated by blocks 302 and 304. At block 302, the processor 24 reads the data, and at block 304 the processor 24 monitors the data to determine when the initial handshaking operations are completed. The processor 24 continues to read the facsimile data at block 302 until it is determined that the handshaking operations are completed at block 304. After the processor 24 determines that the handshaking operations are completed at block 304 ("Yes" at block 304), then control is passed to block 306. The step identified by block 304 may be performed using any suitable technique for determining when initial handshaking routines are completed.

At block 306 it is assumed that the processor 24 detects, in the received data, encoded facsimile image data as well as the coding format of this facsimile image data. By example, the detection of the coding format may be performed in accordance with section 4.6 of TIA/EIA/IS-134, and may be performed based on a detection of a Data Compression Format parameter of a T.30 Session Subparameter described in section 4.6 of TIA/EIA/IS-134. After the step of block 306 is performed, at block 308 the processor 24 reads a first line (i.e., a first received line) of the encoded facsimile image data (i.e., the first line is one-dimensionally encoded). The line read at block 308 is then stored as a REFERENCE variable in memory 36 of the BMI 120 (block 310), and is forwarded to the facsimile device 128 via the MSC 120a and PSTN 130 (block 312). After the step indicated by block 312 is performed, control passes to block 314 through connector C. At block 314 it is assumed that a first line of two-dimensional encoded facsimile image data received by the BMI 120 is read by the processor 24. Control then passes to block 316. At block 316 the line read at block 314 is loaded into the CODING variable within memory 36 of the BMI 120.

Thereafter, control is passed to block 317 where the line stored as the CODING variable is converted by block 32 from two-dimensional coded facsimile image data to one-dimensional coded facsimile image data. In accordance with one embodiment of the invention, this step is performed so as to convert the two-dimensional coded facsimile image data directly to one-dimensional coded facsimile image data. In accordance with another embodiment of the invention, the two-dimensional coded facsimile image data is converted to non-encoded facsimile image data within the BMI 120 before being converted to one-dimensional coded facsimile image data. For example, in this embodiment of the invention, at block 317 steps are performed of decoding the line of facsimile image data stored as the REFERENCE variable (this line is one-dimensionally coded) to provide a first line of non-encoded facsimile image data, and decoding the two-dimensionally coded line of facsimile image data stored as the CODING variable, based on the first line of non-encoded facsimile image data, to provide a resultant second line of non-encoded facsimile image data. A next step includes one-dimensionally encoding the second line of non-encoded facsimile image data to provide a corresponding one-dimensionally coded line of facsimile image data. This step of encoding may be performed using any suitable one-dimensional encoding technique, such as that described in, by example, section 4.1 of the TSS Group 3 standard. Also, it can be appreciated that the decoding procedure may be performed at least based upon, for example, a reversal of the coding procedures described in section 4.2 and Fig. 7/T.4 of the TSS Group 3 standard.

After the step of block 317 is performed, control passes to block 318 where the line of one-dimensionally coded facsimile image data obtained at block 317 is forwarded from the processor 24 to the facsimile device 128 via the MSC 120a and PSTN 130 of the communications network 100. Control is then passed to block 319 through connector D. At block 319, this same line of facsimile image data (which is in one-dimensional coded form) is loaded into the REFERENCE variable stored within the memory 36 of the BMI 120. Thereafter, the processor 24 determines whether additional two-dimensional coded facsimile image data has been received (block 320). If the base station 110 determines that additional two-dimensional coded facsimile image data has been received ("Yes" at block 320), then control is passed back to block 314 where a next line of the two-dimensional coded facsimile image data is read, and the method continues in the manner described above. If no additional two-dimensional coded facsimile image data has been received ("No" at block 320), then control is passed to block 321 where the processor 24 monitors the output of interface 30 to determine whether handshaking routine data, such as, for example, a message indicating an end-of-page and a beginning of a next page, has been received by the BMI 120.

If "Yes" at block 321, then control passes back to block 302, and the method proceeds in a similar manner as was described above. If "No" at block 321, and assuming that the processor 24 receives an end-of document message (e.g., an End of Message Frame) from interface 30 (i.e.,this message was originally transmitted from the mobile station 101 to the BMI 120 over interface 105), then control passes to block 322 where the routine is terminated. During the performance of the steps indicated by blocks 321 and 322, communications occur between the facsimile devices 403 and 128 in accordance with, by example, the procedures of Phases D and E described above.

It should be noted that the above-described methods are not intended to be limited to being performed in a mobile station 101, radiotelephone, or a BMI 120 as described above, but may also be performed in any suitable devices (e.g., base station 110) wherein it is desired to transform one-dimensional coded data into two-dimensional coded data and/or vice versa. Also, although the invention is described in the context of a CDMA implementation, it is to be understood that the invention may also be employed where other suitable access types, such as TDMA, are employed. Also, and as was previously described, other suitable coding techniques besides MH and MMR coding schemes may be employed to achieve one-dimensional coding and two-dimensional coding, respectively, including, by example, proprietary coding schemes. It also should be noted that, as was described above, it is preferable that the coding and decoding techniques of the invention be performed to the facsimile image data "on the fly". That is, it is preferable that the one-dimensionally encoded facsimile image data be transformed to two-dimensionally encoded facsimile image data within the mobile station 101 after a sufficient amount of data is received by the mobile station 101 from the facsimile device 403 for enabling such transformation to be provided. It is also preferable that the two-dimensionally encoded facsimile image data be transformed to one-dimensionally encoded facsimile image data within the BMI 120 after a sufficient amount of the two-dimensionally encoded facsimile image data is received by the BMI 120 for enabling such a transformation to be provided. In either case, the amount of coded facsimile image data needed to be received in order to enable the transformations to occur depends on the picture elements represented by the encoded facsimile image data, but normally includes at least one line of coded image data. Also, although the invention is described above in the context of an example wherein steps are performed of storing or buffering `whole lines (i.e., two whole lines) of facsimile image data in order to be able to subsequently perform coding and decoding techniques, it is not intended that the invention be so limited. By example, it is within the scope of this invention that the encoding/decoding techniques be performed to the facsimile image data after a full page of the facsimile image data has been received by the respective mobile station 101 and BMI 120.

Also, although the invention is described in the context of the mobile terminal 101 transforming one-dimensional coded facsimile image data received from the facsimile device 403 into two-dimensional coded facsimile image data, and is also described in the context of the BMI 120 transforming two-dimensional coded facsimile image data received from the mobile station 101 to one-dimensional coded facsimile image data, it should be noted that the process may also be performed in reverse. That is, it is within the scope of this invention for the BMI 120 to perform the above described techniques for transforming one-dimensional coded facsimile image data output by the facsimile device 128, to two-dimensionally coded facsimile image data for subsequent transmission to the mobile station 101. It is also within the scope of this invention for the mobile station 101 to perform the above described techniques for transforming two-dimensionally coded facsimile image data received from the BMI 120 to one-dimensionally coded facsimile image data, for subsequent forwarding to the facsimile device 403. Furthermore, it is within the scope of this invention to convert facsimile image data that is in a one-dimensional encoded format, or some other, N-dimensional encoded format, into another selected encoded format (e.g., an X-dimensional format) before the facsimile image data is provided over the air interface 105. Similarly, it is within the scope of this invention to convert facsimile image data received over interface 105 into a format other than a one-dimensional encoded format, such as a selected, intermediate or non-encoded format, before forwarding the facsimile image data to a destination facsimile device.

The present invention may be embodied in other specific forms without departing from its essential attributes. Accordingly reference should be made to the appended claims and other general statement's herein rather than to the foregoing specific description as indicating the scope of invention.

Furthermore, each feature disclosed in this specification (which term includes the claims) and/or shown in the drawings may be incorporated in the invention independently of other disclosed and/or illustrated features. In this regard, the invention includes any novel features or combination of features disclosed herein either explicitly or any generalisation thereof irrespective of whether or not it relates to the claimed invention or mitigates any or all of the problems addressed.

The appended abstract as filed herewith is included in the specification by reference.

## Claims

1. A method, usable in a transmitter device that is bidirectionally coupled to a facsimile device, for converting one-dimensional coded image data output by the facsimile device to two-dimensional coded image data for transmission to a receiver station, the method comprising the steps of:
1) detecting the one-dimensional coded image data output by the facsimile device;
2) reading a first line of the one-dimensional coded image data;
3) transmitting the line of one-dimensional coded image data read at step 2 to the receiver station;
4) reading a next line of the one-dimensional coded image data;
5) comparing the line of one-dimensional coded image data read at step 4 to the line of one-dimensional coded image data read at step 2 to determine whether or not they correlate, and if they do correlate, two-dimensionally encoding the line of one-dimensional coded image data read at step 4, based on the line of one-dimensional coded image data read at step 2, to produce a two-dimensional coded image data line; and
6) transmitting the two-dimensional coded image data line produced in step 5 to the receiver station.

2. A method as set forth in claim 1 or claim 2, wherein the facsimile device is in communication with a destination facsimile device via a bidirectional link that includes the transmitter device and the receiver station, wherein information relating to a handshaking operation occurring between the facsimile devices is exchanged between the facsimile devices via the bidirectional link, and wherein prior to the performance of step 1, steps are performed at the transmitter device of:
a) reading the information to determine if the handshaking operation is completed; and
b) if it is determined that the handshaking operation is completed, performing the method steps beginning at step 1.

3. A method as set forth in claim 1 or claim 2, wherein the transmitter device includes a radiotelephone and the receiver station includes a Base Station, Mobile Switching Center and Interworking Function (BMI).

4. A method as set forth in claim 1 or claim 2 or claim 3, wherein the two-dimensional coded image data line includes data encoded in accordance with a Modified Modified Read (MMR) encoding technique.

5. A method as set forth in any preceding claim, wherein the one-dimensional coded image data includes data encoded in accordance with a Modified Huffman (MH) encoding technique.

6. A method as set forth in any preceding claim, wherein between steps 2 and 3, a step is performed of storing the line of one-dimensional coded image data read at step 2 as a reference line, wherein step 3 is performed by transmitting the line of one-dimensional coded image data stored as the reference line to the receiver station, wherein between the steps 4 and 5, a step is performed of storing the line of one-dimensional coded image data read at step 4 as a coding line, and wherein the step of comparing is performed by comparing the line of one-dimensional coded image data stored as the reference line to the line of one-dimensional coded image data stored as the coding line to determine whether or not they correlate, and if they do correlate, two-dimensionally encoding the line of one dimensional coded image data stored as the coding line, based on the line of one-dimensional coded image data stored as the reference line, to produce the two-dimensional coded image data.

7. A method as set forth in claim 6, wherein if it is determined in the comparing step that the line of one-dimensional coded image data stored as the reference line does not correlate to the line of one-dimensional coded image data stored as the coding line, steps are performed within the transmitter device of:
a) storing the line of one-dimensional coded image data stored as the coding line as the reference line; and
b) transmitting the line of one-dimensional coded image data stored as the reference line in step a, from the transmitter device to the receiver station, and thereafter performing the method steps beginning at step 4.

8. A method as set forth in claim 6, wherein after the performance of step 6, steps are performed within the transmitter device of:
a) storing the line of one-dimensional coded image data originally stored as the coding line as the reference line;
b) detecting additional one-dimensional coded image data output by the facsimile device, and thereafter performing the method steps beginning at step 4.

9. A method as set forth in any preceding claim, wherein after step 4 is performed, and prior to the step of comparing, steps are performed of:
decoding the line of one-dimensional coded image data read at step 2 to produce a non-encoded version of the line read at step 2; and
decoding the line of one-dimensional coded image data read at step 4 to produce a non-encoded version of the line read at step 4; and
wherein the step of comparing is performed by comparing the non-encoded version of the line read at step 2 to the non-encoded version of the line read at step 4 to determine whether or not they correlate, and if they do correlate, the step of two-dimensionally encoding is performed by two-dimensionally encoding the non-encoded version of the line read at step 4, based on the non-encoded version of the line read at step 2, to produce the two-dimensional coded image data line.

10. A method as set forth in any preceding claim, wherein the one-dimensional coded image data includes one-dimensional coded facsimile image data, and wherein the two-dimensional coded image data includes two-dimensional coded facsimile image data.

11. A method, usable in a receiving station coupled to a destination facsimile device, for converting two-dimensional coded image data to one-dimensional coded image data for being communicated to the destination facsimile device, the method comprising the steps of:
1) receiving coded image data at the receiving station;
2) detecting the coded image data received at the receiving station;
3) reading a first line of the coded image data detected at step 2;
4) forwarding the line of the coded image data read at step 3 to the destination facsimile device;
5) reading a next, two-dimensionally coded line of the coded image data;
6) converting the line of coded image data read at step 5 to a one-dimensional coded line of image data, based on the line of the coded image data read at step 3; and
7) communicating the one-dimensional coded line of image data to the destination facsimile device.

12. A method as set forth in claim 11, wherein the coded image data received at the receiving station at step 1 is received from a transmitter station that includes a source facsimile device which produced the coded image data, wherein the destination facsimile device is in communication with the source facsimile device via a bi-directional link that includes the receiving station, wherein information relating to a handshaking operation occurring between the source and destination facsimile devices is exchanged between these facsimile devices via the bi-directional link, and wherein prior to the performance of step 1, steps are performed at the receiving station of:
a) reading the information to determine if the handshaking operation is completed; and
b) after it is determined that the handshaking operation is completed, performing the method steps beginning at step 1.

13. A method as set forth in claim 11 or claim 12, wherein the coded image data includes coded facsimile image data.

14. A method as set forth in claim 13, wherein the coded facsimile image data received by the receiving station is encoded in accordance with a Modified Modified Read (MMR) encoding technique.

15. A method as set forth in any of claims 11 to 14, wherein between steps 3 and 4, a step is performed of storing the first line of the coded image data as a reference line, wherein between steps 5 and 6, a step is performed of storing the line of coded image data read at step 5 as a coding line, and wherein step 6 is performed by converting the line of coded image data stored as the coding line to the one-dimensional coded line of image data, based on the line of the coded image data stored as the reference line.

16. A method as set forth in claim 15, wherein after the performance of step 7, steps are performed within the receiving station of:
a) storing the one-dimensional coded line of image data as the reference line; and
b) detecting additional two-dimensional coded image data received by the receiving station, and thereafter performing the method steps beginning at step 5.

17. A method as set forth in any of claims 11 to 16, wherein the one-dimensional coded line of image data includes data encoded in accordance with a Modified Huffman (MH) encoding technique.

18. A method as set forth in any of claims 11 to 17, wherein the step of converting is performed by the steps of:
converting the line of coded image data read at step 3 to a non-encoded version of the line read at step 3;
converting the line of coded image data read at step 5 to a non-encoded version of the line read at step 5, based on the non-encoded version of the line read at step 3; and
converting the non-encoded version of the line read at step 5 to the one-dimensional coded line of image data.

19. A method for processing first encoded facsimile data generated by a facsimile station for subsequent communication to a receiving station, the method comprising the steps of:
detecting the first encoded facsimile data;
encoding the first encoded facsimile data to produce second encoded facsimile data; and
transmitting the second encoded facsimile data to the receiving station.

20. A method as set forth in claim 19, wherein the first encoded facsimile data is one-dimensionally encoded.

21. A method as set forth in claim 19, wherein the step of encoding is performed so as to two-dimensionally encode the first encoded facsimile data.

22. A method as set forth in claim 19, wherein the step of encoding is performed by encoding the first encoded facsimile data in accordance with a MMR encoding technique.

23. A method as set forth in claim 19, wherein the first and second encoded facsimile data include facsimile image data.

24. A method as set forth in any of claims 19 to 23, wherein the facsimile station includes a source facsimile device and a radiotelephone that is bidirectionally coupled to the source facsimile device, and wherein the receiving station includes a Base Station, Mobile Switching Center and Interworking Function.

25. A method as set forth in any of claims 19 to 24, and further comprising the steps of:
receiving the second encoded facsimile data at the receiving station; and, within the receiver station, performing steps of:
detecting the second encoded facsimile data received by the receiving station;
converting the second encoded facsimile data back to first encoded facsimile data; and
forwarding this first encoded facsimile data to a destination facsimile device.

26. A method as set forth in any of claims 19 to 25, wherein the first encoded facsimile data includes a plurality of lines of first encoded facsimile data, wherein after the step of detecting is performed, a step is performed of reading a sufficient number of the lines of first encoded facsimile data to enable second encoded facsimile data to be produced, and wherein the step of encoding is performed by encoding at least one of the lines of first encoded facsimile data to produce the second encoded facsimile data.

27. A method as set forth in any of claims 19 to 26, wherein the step of transmitting is performed so as to transmit the second encoded facsimile data to the receiving station through a wireless interface.

28. An apparatus for processing first encoded data output by a facsimile device, for subsequent communication to a receiver station, the apparatus comprising:
a transceiver, said transceiver being bidirectionally coupled to said receiver station; and
a controller, said controller being bidirectionally coupled to said facsimile device, said controller also being bidirectionally coupled to said transceiver, said controller including means which is responsive to the first encoded data output by said source facsimile device for encoding the first encoded data to produce second encoded data, and for outputting the second encoded data to the transceiver for transmission to the receiver station.

29. An apparatus as set forth in claim 28, wherein the apparatus includes a radiotelephone and the receiver station includes a base station.

30. An apparatus as set forth in claim 28 or 29, and further comprising a Code Division Multiple Access (CDMA) processor block interposed between said controller and said transceiver, wherein the CDMA processor block processes the second encoded data output by the controller in accordance with a CDMA technique.

31. An apparatus as set forth in any of claims 28 to 30, wherein the first encoded data includes facsimile image data that is encoded in accordance with a Modified Huffman (MH) technique, and wherein the second encoded data includes facsimile image data that is encoded in accordance with a Modified Modified Read (MMR) technique.

32. An apparatus as set forth in any of claims 28 to 31, wherein the first encoded data includes one-dimensionally encoded data and the second encoded data includes two-dimensionally encoded data.

33. An apparatus as set forth in any of claims 28 to 32, wherein said transceiver is bidirectionally coupled to said receiver station through a wireless interface.

34. An apparatus for processing second encoded facsimile data, the apparatus comprising:
a first interface coupled to an output of a source facsimile transmitting station, said first interface for receiving second encoded facsimile data output by said source facsimile transmitting station; and
a processor, said processor being bidirectionally coupled to a destination facsimile device through a second interface, said processor also being bidirectionally coupled to said first interface, said processor including means, being responsive to the second encoded facsimile data, for converting the second encoded facsimile data to first encoded facsimile data, and for forwarding the first encoded facsimile data to the destination facsimile device via said second interface.

35. An apparatus as set forth in claim 34, wherein the second encoded facsimile data is encoded in accordance with a Modified Modified Read (MMR) technique.

36. An apparatus as set forth in claim 34 or claim 35, wherein the first encoded facsimile data is encoded in accordance with a Modified Huffman (MH) technique.

37. An apparatus as set forth in any of claims 34 to 36, wherein the second encoded facsimile data is encoded in accordance with a two-dimensional encoding technique.

38. An apparatus as set forth in any of claims 34 to 37, wherein the first encoded facsimile data is encoded in accordance with a one-dimensional encoding technique.

39. An apparatus as set forth in any of claims 34 to 38, wherein the first interface includes a wireless interface.
